# EUROPÄISCHE PATENTSCHRIFT

(11) **EP 2 274 627 B1**
(45) Veröffentlichungstag und Bekanntmachung des Hinweises auf die Patenterteilung: **19.07.2017**
(21) Anmeldenummer: 09737961.4
(22) Anmeldetag: 01.04.2009
(51) Int. Cl.: G01P 15/125, G01P 15/18

(54) **MIKROMECHANISCHES BAUELEMENT UND VERFAHREN ZUM BETRIEB EINES MIKROMECHANISCHEN BAUELEMENTS**
MICROMECHANICAL COMPONENT AND METHOD FOR OPERATING A MICROMECHANICAL COMPONENT
COMPOSANT MICROMÉCANIQUE ET PROCÉDÉ DE FONCTIONNEMENT D'UN COMPOSANT MICROMÉCANIQUE

(30) Priorität: 29.04.2008 DE 102008001442
(43) Veröffentlichungstag der Anmeldung: 19.01.2011
(73) Patentinhaber: Robert Bosch GmbH, 70442 Stuttgart (DE)
(72) Erfinder: CLASSEN, Johannes, 72764 Reutlingen (DE); TEBJE, Lars, 72770 Reutlingen (DE)
(86) Internationale Anmeldenummer: PCT/EP2009/053860
(87) Internationale Veröffentlichungsnummer: WO 2009/132917

(56) Entgegenhaltungen:
- WO-A-2005/121812
- WO-A-2008/043831
- US-A- 5 806 365
- US-A1- 2005 005 698
- US-A1- 2008 087 085

## Beschreibung

### Stand der Technik

Die Erfindung geht aus von einem mikromechanischen Bauelement nach dem Oberbegriff des Anspruchs 1.

Solche mikromechanischen Bauelemente sind allgemein bekannt. Beispielsweise ist aus der Druckschrift DE 197 19 779 A1 ein Beschleunigungssensor mit einer beweglich an einem Substrat aufgehängten, aufgrund einer Beschleunigungseinwirkung in eine Richtung auslenkbaren, Schwingstruktur und Auswertemitteln zum Erfassen einer beschleunigungsbedingten Auslenkung der Schwingstruktur bekannt. Nachteiligerweise ist eine Erfassung von Beschleunigungseinwirkungen parallel zu einer Mehrzahl von Richtungen, welche senkrecht aufeinander stehen, mit einem einzigen Beschleunigungssensor jedoch nicht vorgesehen. Zur mehrkanaligen Beschleunigungsvermessung ist daher der Einsatz einer Mehrzahl derartiger Beschleunigungssensoren, welche zueinander unterschiedlich ausgerichtet sind, notwendig.

### Offenbarung der Erfindung

Das erfindungsgemäße mikromechanische Bauelement und das erfindungsgemäße Verfahren zum Betrieb eines mikromechanischen Bauelements gemäß den nebengeordneten Ansprüchen haben gegenüber dem Stand der Technik den Vorteil, dass mit der lediglich einen seismischen Masse eine separate Detektion von drei senkrecht zueinander gerichteten Beschleunigungswirkungen auf das mikromechanische Bauelement ermöglicht wird. Dies wird dadurch erreicht, dass sowohl die erste Auslenkung der seismischen Masse, in Form einer Translation der seismischen Masse im Wesentlichen parallel zur ersten Richtung, von dem ersten Detektionsmittel, als auch eine zweite Auslenkung der seismischen Masse, in Form einer Rotation der seismischen Masse im Wesentlichen um die erste Rotationsachse, von dem zweiten Detektionsmittel detektierbar bzw. vermessbar sind. Somit wird mit nur einer einzigen seismischen Masse eine dreikanalige Beschleunigungsvermessung ermöglicht, d.h. das mikromechanische Bauelement ist gleichzeitig in drei Richtungen gegenüber Beschleunigungskräften sensitiv. Somit ist im Vergleich zum Stand der Technik eine deutlich bauraumkompaktere und stromsparendere Realisierung eines mehrkanaligen Beschleunigungssensors möglich, so dass einerseits die Herstellungskosten und andererseits der Implementierungsaufwand in erheblicher Weise gesenkt werden. Erfindungsgemäß weist die seismische Masse eine asymmetrische Massenverteilung gegenüber der ersten Rotationsachse bzw. bezüglich einer die erste Rotationsachse schneidenden und parallel zur dritten Richtung verlaufenden Linie auf, so dass insbesondere eine Beschleunigungswirkung parallel zur dritten Richtung, d.h. senkrecht zur ersten Richtung und senkrecht zur ersten Rotationsachse, ein auf die seismische Masse wirkendes Drehmoment erzeugt und somit die zweite Auslenkung der seismischen Masse im Wesentlichen in Form einer Drehung der seismischen Masse um die erste Rotationsachse bewirkt. Detektion und Vermessung im Sinne der vorliegenden Erfindung umfasst insbesondere jede qualitative und/oder quantitative Erkennung und Ermittlung der jeweiligen Auslenkung.

Vorteilhafte Ausgestaltungen und Weiterbildungen der Erfindung sind den Unteransprüchen, sowie der Beschreibung unter Bezugnahme auf die Zeichnung entnehmbar.

Gemäß der Erfindung ist vorgesehen, dass das mikromechanische Bauelement dritte Detektionsmittel zur Detektion einer im Wesentlichen rotativen dritten Auslenkung der seismischen Masse um eine zweite Rotationsachse parallel zu einer dritten Richtung im Wesentlichen parallel zur Haupterstreckungsebene aufweist. Somit ist die Realisierung eines dreikanaligen Beschleunigungssensors möglich, da zusätzlich zur Vermessung der Beschleunigungswirkung parallel zur ersten und parallel zur dritten Richtung auch eine Vermessung einer Beschleunigungswirkung auf das mikromechanische Bauelement parallel zur zweiten Richtung mittels der dritten Detektionsmittel ermöglicht wird. Insbesondere weist die seismische Masse auch eine asymmetrische Massenverteilung bezüglich der zweiten Rotationsachse auf, welche insbesondere der Linie entspricht, so dass eine auf die seismische Masse senkrecht zur zweiten Rotationsachse und senkrecht zur ersten Richtung wirkende Beschleunigungskraft ein auf die seismische Masse wirkendes weiteres Drehmoment erzeugt und somit im Wesentlichen eine Drehung der seismische Masse um die zweite Rotationsachse bewirkt.

Gemäß einer bevorzugten Weiterbildung ist vorgesehen, dass die seismische Masse als Wippe ausgebildet ist, welche insbesondere um die erste und/oder die zweite Rotationsachse drehbeweglich gelagert ist. In vorteilhafter Weise ist durch die Realisierung der seismischen Masse als Wippe, welche um die erste und/oder die zweite Achse drehbeweglich ist, eine besonders einfache Implementierung der entsprechenden Detektionsmittel beispielsweise unterhalb der seismischen Masse möglich, wobei die Wippe bezüglich der jeweiligen Rotationsachse vorzugsweise eine asymmetrische Massenverteilung aufweist.

Gemäß einer weiteren bevorzugten Weiterbildung ist vorgesehen, dass die ersten, zweiten und/oder dritten Detektionsmittel Elektroden, insbesondere zur kapazitiven Vermessung der ersten, zweiten und/oder dritten Auslenkung, umfassen, wobei die ersten und/oder zweiten Detektionsmittel bevorzugt als Fingerelektroden und/oder die dritten Detektionsmittel bevorzugt als Flächenelektroden ausgebildet sind. Besonders vorteilhaft sind somit in vergleichsweise einfacher und kostengünstiger Weise die ersten, zweiten und/oder dritten Detektionsmittel realisierbar, welche vorzugsweise durch die kapazitive Vermessung der ersten, zweiten und dritten Auslenkung eine vergleichsweise präzise Detektion bzw. Vermessung von Beschleunigungswirkungen parallel zur ersten, zur zweiten und/oder zur dritten Richtung erlauben. Die Verwendung von Fingerelektroden ermöglicht besonders bevorzugt eine differentielle Vermessung der Beschleunigungswirkungen parallel zur ersten, zur zweiten und/oder zur dritten Richtung.

Gemäß einer weiteren bevorzugten Weiterbildung ist vorgesehen, dass die ersten und/oder die zweiten Detektionsmittel an wenigstens einem Rand der seismischen Masse und/oder in ersten und/oder zweiten Aussparungen der seismischen Masse angeordnet sind. Besonders vorteilhaft ist somit eine vergleichsweise bauraumkompakte Integration der ersten und/oder der zweiten Detektionsmittel und insbesondere einer Vielzahl von Fingerelektroden in das mikromechanische Bauelement bzw. in die seismische Masse möglich. Besonders bevorzugt ist eine differentielle Auswertung der ersten und/oder zweiten Auslenkung mittels der ersten und/oder zweiten Detektionsmittel vorgesehen.

Gemäß einer weiteren bevorzugten Weiterbildung ist vorgesehen, dass die dritten Detektionsmittel senkrecht zur Haupterstreckungsebene die seismische Masse überlappend angeordnet sind. Besonders vorteilhaft ist somit die dritte Auslenkung parallel zur dritten Richtung vermessbar, welche vorzugsweise senkrecht zur Haupterstreckungsebene ausgerichtet ist. Aufgrund der asymmetrischen Massenverteilung der seismischen Masse bezüglich der zweiten Rotationsachse ist besonders bevorzugt eine differentielle Auswertung der dritten Auslenkung mittels "unterhalb" der seismischen Masse angeordneten dritten Detektionsmittel möglich, so dass keine vergleichsweise prozesstechnisch aufwändige Anordnung von Elektroden "oberhalb" der seismischen Masse zu differentiellen Vermessung der dritten Auslenkung notwendig ist.

Gemäß der Erfindung ist vorgesehen, dass die seismische Masse über Federelemente in Form von genau zwei Torsions-Biege-Federn mit dem Substrat verbunden ist, wobei diese Federelemente derart ausgebildet sind, dass die erste, die zweite und/oder die dritte Auslenkung der seismischen Masse ermöglicht werden. Besonders vorteilhaft sind aufgrund der Verwendung von lediglich einer einzigen seismischen Masse zur Vermessung von Beschleunigungswirkungen parallel zur ersten, zweiten und dritten Richtung im Vergleich zum Stand der Technik auch nur die ersten Federelemente zur beweglichen Lagerung der seismischen Masse notwendig. Erfindungsgemäß umfassen die ersten Federelemente zwei Torsions- Biege-Federn, welche während der ersten Auslenkung gleichsam in die erste Richtung verbogen werden, welche während der zweiten Auslenkung entgegengesetzt parallel zur ersten Richtung verbogen werden, d.h. dass eine der zwei Torsion-Biege-Federn in Richtung der ersten Richtung und die zweite der zwei Torsions-Biege-Federn antiparallel zur ersten Richtung ausgelenkt werden, und welche während der dritten Auslenkungsbewegung eine Torsion um die zweite Rotationsachse durchführen.

Gemäß der Erfindung ist vorgesehen, dass das mikromechanische Bauelement einen Beschleunigungssensor umfasst, wobei insbesondere die erste, die zweite und die dritte Richtung zueinander senkrecht ausgerichtet sind, so dass besonders vorteilhaft eine Vermessung von Beschleunigungswirkungen auf das mikromechanische Bauelement in alle drei Raumrichtungen mit nur einer einzigen seismischen Masse ermöglicht wird.

Ein weiterer Gegenstand der vorliegenden Erfindung ist ein Verfahren zum Betrieb eines mikromechanischen Bauelements, wobei eine Beschleunigung des mikromechanischen Bauelements in die erste Richtung durch eine Vermessung der im Wesentlichen translativen ersten Auslenkung der seismischen Masse und eine Beschleunigung des mikromechanischen Bauelements in eine zur ersten Richtung im Wesentlichen senkrechten zweiten Richtung durch eine Vermessung der im Wesentlichen rotativen zweiten Auslenkung der seismischen Masse detektiert wird, so dass im Gegensatz zum Stand der Technik mit nur einer einzigen seismischen Masse eine wenigstens zweikanalige Vermessung von Beschleunigungswirkungen auf das mikromechanische Bauelement durch die Vermessung der im Wesentlichen translativen ersten Auslenkung und der im Wesentlichen rotativen zweiten Auslenkung ermöglicht wird.

Gemäß der Erfindung ist vorgesehen, dass eine Beschleunigung des mikromechanischen Bauelements in eine zur ersten und zur zweiten Richtung jeweils im Wesentlichen senkrechten dritten Richtung durch eine Vermessung der im Wesentlichen rotativen dritten Auslenkung der seismischen Masse detektiert wird, so dass in vorteilhafter Weise mit der nur einen seismischen Masse zusätzlich auch eine Beschleunigungswirkung auf das mikromechanische Bauelement parallel zur dritten Richtung vermessbar ist.

Gemäß einer weiteren bevorzugten Weiterbildung ist vorgesehen, dass die erste Auslenkung mit den ersten Detektionsmitteln, die zweite Auslenkung mit den zweiten Detektionsmitteln und/oder die dritte Auslenkung mit den dritten Detektionsmitteln vermessen werden, so dass besonders vorteilhaft die Beschleunigungswirkungen in die erste, zweite und/oder dritte Richtung unabhängig voneinander durch die ersten, zweiten und/oder dritten Detektionsmittel vermessbar sind.

Ausführungsbeispiele der vorliegenden Erfindung sind in den Zeichnungen dargestellt und in der nachfolgenden Beschreibung näher erläutert.

### Kurze Beschreibung der Zeichnungen

Es zeigen
**Figuren 1a, 1b und 1c** schematische Aufsichten von in x-, y- und z-Richtung sensitiven Beschleunigungssensoren gemäß dem Stand der Technik,
**Figuren 2a und 2b** schematische Seitenansichten des in z-Richtung sensitiven Beschleunigungssensor gemäß dem Stand der Technik und
**Figuren 3a, 3b und 3c** schematische Aufsichten eines mikromechanischen Bauelements gemäß einer beispielhaften Ausführungsform der vorliegenden Erfindung.

### Ausführungsformen der Erfindung

In den verschiedenen Figuren sind gleiche Teile stets mit den gleichen Bezugszeichen versehen und werden daher in der Regel auch jeweils nur einmal erwähnt bzw. benannt.

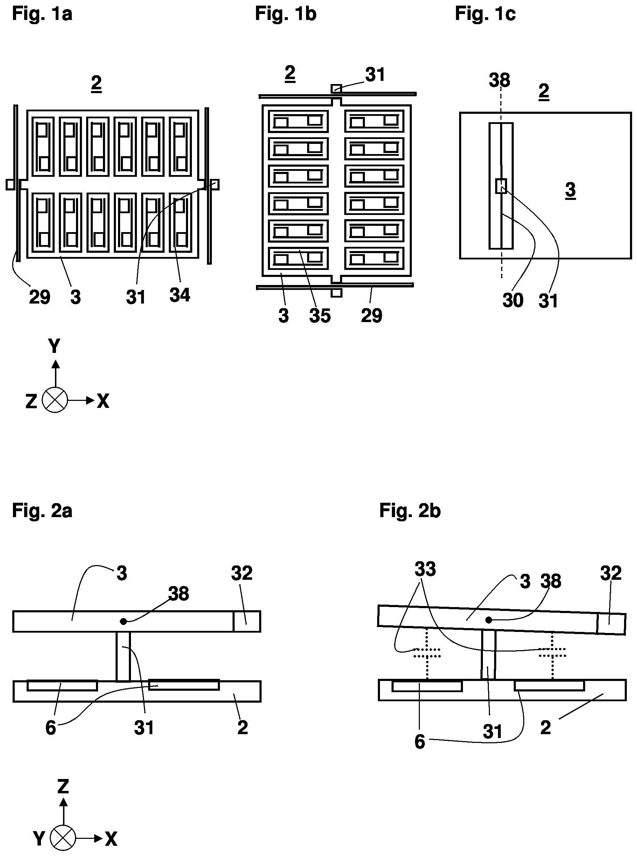

In den **Figuren 1a, 1b und 1c** sind schematische Aufsichten von in x-, y- und z-Richtung sensitiven Beschleunigungssensoren gemäß dem Stand der Technik dargestellt, wobei der in **Figur 1a** illustrierte und parallel zur x-Richtung sensitive Beschleunigungssensor ein Substrat 2 und eine seismische Masse 3 aufweist, wobei die x-Richtung parallel zu einer Haupterstreckungsebene des Substrats 2 verläuft und wobei die seismische Masse 3 über zwei Federelemente 29 und zwei Befestigungsanker 31 am Substrat 2 derart befestigt ist, dass die seismische Masse 2 parallel zur x-Richtung relativ zum Substrat 2 beweglich ist. Eine auf den Beschleunigungssensor wirkende Beschleunigungskraft mit einer Komponente parallel zur x-Richtung erzeugt aufgrund der Massenträgheit der seismischen Masse 3 gegenüber dem Substrat 2 eine Auslenkung derselben parallel zur x-Richtung. Diese Auslenkung wird von Detektionsmitteln 34 in Form von Elektroden vermessen, welche in Aussparungen der seismischen Masse 3 angeordnet und ortsfest am Substrat 2 fixiert sind. Die seismische Masse 3 bzw. Teilbereiche der seismischen Masse 3 bilden die Gegenelektroden zu den Elektroden, so dass die Auslenkung der seismischen Masse 3 durch eine Kapazitätsänderung zwischen den Elektroden und den Gegenelektroden vermessbar ist. In **Figur 1b** ist ein in y-Richtung sensitiver Beschleunigungssensor zur Detektion einer Beschleunigungswirkung parallel zur y-Richtung dargestellt, wobei die y-Richtung insbesondere parallel zur Haupterstreckungsebene und senkrecht zur x-Richtung verläuft und wobei der in y-Richtung sensitive Beschleunigungssensor identisch dem in Figur 1a illustrierten in x-Richtung sensitiven Beschleunigungssensor ist und lediglich um 90 Grad in der Haupterstreckungsebene gedreht angeordnet ist. In **Figur 1c** ist ein in z-Richtung sensitiver Beschleunigungssensor dargestellt, wobei die z-Richtung senkrecht zur x-Richtung und senkrecht zur y-Richtung verläuft und wobei der in z-Richtung sensitive Beschleunigungssensor ebenfalls ein Substrat 2 und eine gegenüber dem Substrat 2 bewegliche seismische Masse 3 hier in Form einer Wippe aufweist, welche mittels eines Befestigungsankers 31 in einer Aussparung der seismischen Masse 3 an dem Substrat 2 befestigt und mittels einer Torsionsfeder 30 in der Aussparung drehbar um eine Rotationsachse 38 parallel zur Torsionsfeder 30 gelagert ist, d.h. die Rotationsachse 38 ist insbesondere parallel zur y-Richtung angeordnet und durchläuft die Torsionsfeder 30 im Wesentlichen axial. Aufgrund einer asymmetrischen Massenverteilung der seismischen Masse 3 relativ zur Rotationsachse 38 bewirkt eine Beschleunigungswirkung auf den Beschleunigungssensor parallel zur z-Richtung eine Drehung der seismischen Masse 3 um die Rotationsachse 38, wobei einer Drehung der seismischen Masse 3 durch Flächenelektroden 6, welche unterhalb der seismischen Masse, d.h. in z-Richtung mit der seismischen Masse 3 überlappend, und auf oder in dem Substrat 2 angeordnet sind, vermessbar ist. Zur mehrkanaligen Vermessung von Beschleunigungswirkungen in alle drei Raumrichtungen gleichzeitig müssen gemäß dem Stand der Technik demnach alle drei in x-, y- und z-Richtung sensitiven Beschleunigungssensoren verwendet werden.

In den **Figuren 2a und 2b** sind schematische Seitenansichten des in z-Richtung sensitiven Beschleunigungssensors gemäß dem Stand der Technik dargestellt, wobei die asymmetrische Massenverteilung der seismischen Masse 3 bezüglich der Rotationsachse 38 durch einen zusätzlichen eingezeichneten Teilbereich 32 der seismischen Masse verdeutlicht wird. Eine zwischen den Flächenelektroden 6 und der seismischen Masse 3 vermessbare elektrische Kapazität, symbolisch angedeutet durch die schematischen Plattenkondensatoren 33 in Figur 2b, verändert während einer Drehung der seismischen Masse 3 um die Rotationsachse 38 ihren Wert, so dass eine Beschleunigungswirkung auf den Beschleunigungssensor in z-Richtung vermessbar ist.

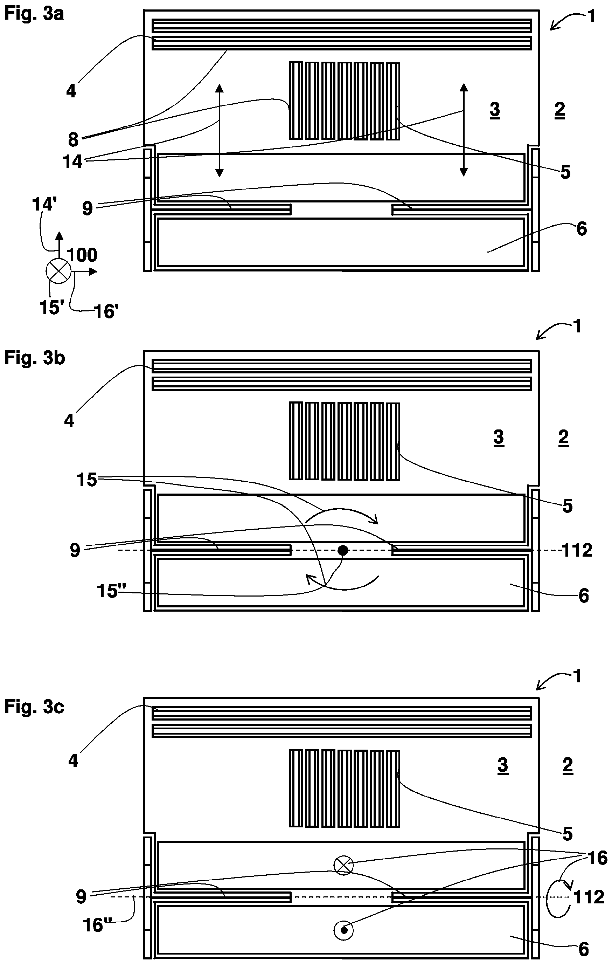

In den **Figuren 3a, 3b und 3c** sind schematische Aufsichten einer ersten Auslenkung 14, einer zweiten Auslenkung 15 und einer dritten Auslenkung 16 einer seismischen Masse 3 eines mikromechanischen Bauelements 1 gemäß einer beispielhaften Ausführungsform der vorliegenden Erfindung dargestellt, wobei das mikromechanische Bauelement 1 ein Substrat 2, eine seismische Masse 3 und erste, zweite und dritte Detektionsmittel 4, 5, 6 aufweist, wobei das Substrat 2 eine Haupterstreckungsebene 100 aufweist und wobei die ersten Detektionsmittel 4 zur Detektion einer im Wesentlichen translativen ersten Auslenkung 14 der seismischen Masse 3 dargestellt in **Figur 3a** entlang einer ersten Richtung 14' im Wesentlichen parallel zur Haupterstreckungsebene 100 vorgesehen sind, wobei die erste Auslenkung 14 durch eine Beschleunigungswirkung auf das mikromechanische Bauelement 1 parallel zur ersten Richtung 14' erzeugt wird. Die zweiten Detektionsmittel 5 sind zur Detektion einer im Wesentlichen rotativen zweiten Auslenkung 15 der seismischen Masse 3 dargestellt in **Figur 3b** um eine erste Rotationsachse 15" parallel zu einer zweiten Richtung 15' im Wesentlichen senkrecht zur Haupterstreckungsebene 100 vorgesehen, wobei die zweite Auslenkung 15 durch eine Beschleunigungswirkung auf das mikromechanische Bauelement 1 parallel zu einer senkrecht zur ersten Richtung 14' und senkrecht zur zweiten Richtung 15' verlaufenden dritten Richtung 16' erzeugt wird, da die seismische Masse 1 bezüglich der ersten Rotationsachse 15" bzw. bezüglich einer die erste Rotationsachse 15" schneidenden und parallel zur dritten Richtung 16' verlaufenden Linie 112 eine asymmetrische Massenverteilung aufweist. Die dritten Detektionsmittel 6 sind zur Detektion einer im Wesentlichen rotativen dritten Auslenkung 16 der seismischen Masse 3 dargestellt in **Figur 3c** um eine zweite Rotationsachse 16" parallel zur dritten Richtung 16' vorgesehen, wobei die dritte Auslenkung 16 durch eine Beschleunigungswirkung auf das mikromechanische Bauelement 1 parallel zur zweiten Richtung 15' und die asymmetrische Massenverteilung der seismischen Masse bezüglich der Linie 112 erzeugt wird und wobei die seismische Masse 1 somit als Wippe ausgebildet ist, welche jeweils um die erste und die zweite Rotationsachse 15", 16" drehbar bzw. verkippbar gelagert ist. Die ersten und zweiten Detektionsmittel 4, 5 sind in Aussparungen 8 der seismischen Masse 3 angeordnet und als Elektroden ausgebildet, so dass die erste und zweite Auslenkung 14, 15 durch eine Kapazitätsänderung an den jeweiligen Elektroden, insbesondere gemäß der x- und y-sensitiven Beschleunigungssensoren illustriert in den Figuren 1 a und 1 b, vorzugsweise jeweils differentiell vermessbar sind. Die dritten Detektionsmittel 6 sind als Flächenelektroden parallel zur zweiten Richtung 15' unterhalb der seismischen Masse 3 angeordnet und fungieren insbesondere nach dem Prinzip des z-sensitiven Beschleunigungssensors dargestellt in den Figuren 1c, 2a und 2b. Die seismische Masse 3 ist über Federelemente 9 in Form von zwei Torsions-Biege-Federn an dem Substrat 2 befestigt und gegenüber dem Substrat 2 zur Ermöglichung der ersten, zweiten und dritten Auslenkung 14, 15, 16 beweglich gelagert. Während der ersten Auslenkung 14 werden die zwei Torsions-Biege-Federn gleichsam in die erste Richtung verbogen. Während der zweiten Auslenkung werden die beiden Torsions-Biege-Federn entgegengesetzt parallel zur ersten Richtung verbogen, d.h. dass eine der zwei Torsion-Biege-Federn in Richtung der ersten Richtung und die zweite der zwei Torsions-Biege-Federn antiparallel zur ersten Richtung ausgelenkt werden, so dass die seismische Masse 3 insgesamt im Wesentlichen eine Rotation um die erste Rotationsachse 15" durchführt. Während der dritten Auslenkungsbewegung werden die Torsions-Biege-Federn gleichsam um die zweite Rotationsachse verdreht, so dass die seismische Masse 3 im Wesentlichen eine Rotation um die zweite Rotationsachse 16" durchführt.

## Patentansprüche

1. Mikromechanisches Bauelement (1) mit einem Substrat (2), einer seismischen Masse (3) und ersten und zweiten Detektionsmitteln (4, 5), wobei das mikromechanische Bauelement (1) einen Beschleunigungssensor umfasst, wobei das Substrat (2) eine Haupterstreckungsebene (100) aufweist und wobei die ersten Detektionsmittel (4) zur Detektion einer im Wesentlichen translativen ersten Auslenkung (14) der seismischen Masse (3) entlang einer ersten Richtung (14') im Wesentlichen parallel zur Haupterstreckungsebene (100) durch eine Beschleunigungswirkung auf das mikromechanische Bauelement (1) parallel zur ersten Richtung (14') vorgesehen sind, wobei die zweiten Detektionsmittel (5) zur Detektion einer im Wesentlichen rotativen zweiten Auslenkung (15) der seismischen Masse (3) um eine erste Rotationsachse (15") parallel zu einer zweiten Richtung (15') im Wesentlichen senkrecht zur Haupterstreckungsebene (100) durch eine Beschleunigungswirkung auf das mikromechanische Bauelement (1) parallel zu einer senkrecht zur ersten Richtung (14') und senkrecht zur zweiten Richtung (15') verlaufenden dritten Richtung (16') vorgesehen sind und das mikromechanische Bauelement (1) dritte Detektionsmittel (6) zur Detektion einer im Wesentlichen rotativen dritten Auslenkung (16) der seismischen Masse (3) um eine zweite Rotationsachse (16") parallel zur dritten Richtung (16') im Wesentlichen parallel zur Haupterstreckungsebene (100) durch eine Beschleunigungswirkung auf das mikromechanische Bauelement (1) parallel zur zweiten Richtung (15') aufweist, wobei die erste, die zweite und die dritte Richtung (14', 15', 16') zueinander senkrecht ausgerichtet sind, wobei die seismische Masse (3) bezüglich einer die erste Rotationsachse (15") schneidenden und parallel zur dritten Richtung (16') verlaufenden Linie (112) eine asymmetrische Masseverteilung aufweist, **dadurch gekennzeichnet, dass** die seismische Masse (3) über Federelemente (9) in Form von genau zwei Torsions-Biege-Federn, welche jeweils so angeordnet sind, dass sie um die zweite Rotationsachse (16") verdrehbar sind, mit dem Substrat (2) verbunden ist, wobei die Federelemente (9) derart ausgebildet sind, dass die erste, die zweite und/oder die dritte Auslenkung (14, 15,16) der seismischen Masse (3) ermöglicht werden.

2. Mikromechanisches Bauelement nach Anspruch 1, **dadurch gekennzeichnet, dass** die seismische Masse (3) als Wippe ausgebildet ist, welche insbesondere um die erste und die zweite Rotationsachse (15", 16") drehbeweglich gelagert ist.

3. Mikromechanisches Bauelement (1) nach einem der vorhergehenden Ansprüche, **dadurch gekennzeichnet, dass** die ersten, zweiten und/oder dritten Detektionsmittel (4, 5, 6) Elektroden, insbesondere zur kapazitiven Vermessung der ersten, zweiten und/oder dritten Auslenkung (14, 15, 16), umfassen, wobei die ersten und/oder zweiten Detektionsmittel (4, 5) bevorzugt als Kamm- und/oder Fingerelektroden und/oder die dritten Detektionsmittel (6) bevorzugt als Flächenelektroden ausgebildet sind.

4. Mikromechanisches Bauelement (1) nach einem der vorhergehenden Ansprüche, **dadurch gekennzeichnet, dass** die ersten und/oder die zweiten Detektionsmittel (4, 5) an wenigstens einem Rand der seismischen Masse (3) und/oder in einer Aussparung (8) der seismischen Masse (3) angeordnet sind.

5. Mikromechanisches Bauelement (1) nach einem der vorhergehenden Ansprüche, **dadurch gekennzeichnet, dass** die dritten Detektionsmittel (6) senkrecht zur Haupterstreckungsebene (100) die seismische Masse (3) überlappend angeordnet ist.

6. Verfahren zum Betrieb eines einen Beschleunigungssensor umfassenden mikromechanischen Bauelements (1) nach einem der vorhergehenden Ansprüche, **dadurch gekennzeichnet, dass** eine Beschleunigung des mikromechanischen Bauelements (1) in die erste Richtung (14') durch eine Vermessung der im Wesentlichen translativen ersten Auslenkung (14) der seismischen Masse (3) und eine Beschleunigung des mikromechanischen Bauelements (1) in eine zur ersten Richtung (14') im Wesentlichen senkrechten zweiten Richtung (15') durch eine Vermessung der im Wesentlichen rotativen zweiten Auslenkung (15) der seismischen Masse (3) detektiert wird, wobei eine Beschleunigung des mikromechanischen Bauelements (1) in eine zur ersten und zur zweiten Richtung (14', 15') jeweils im Wesentlichen senkrechten dritten Richtung (16') durch eine Vermessung der im Wesentlichen rotativen dritten Auslenkung (16) der seismischen Masse (3) detektiert wird.

7. Verfahren nach Anspruch 6, **dadurch gekennzeichnet, dass** die erste Auslenkung (14) mit den ersten Detektionsmitteln (4), die zweite Auslenkung (15) mit den zweiten Detektionsmitteln (5) und/oder die dritte Auslenkung (16) mit den dritten Detektionsmitteln (6) vermessen werden.

## Claims

1. Micromechanical component (1) comprising a substrate (2), a seismic mass (3) and first and second detection means (4, 5), wherein the micromechanical component (1) comprises an acceleration sensor, wherein the substrate (2) has a plane of main extent (100) and wherein the first detection means (4) are intended for the detection of a substantially translational first deflection (14) of the seismic mass (3) along a first direction (14') substantially parallel to the plane of main extent (100) as the result of an acceleration acting on the micromechanical component (1) parallel to the first direction (14'), wherein the second detection means (5) are intended for the detection of a substantially rotational second deflection (15) of the seismic mass (3) about a first rotation axis (15") parallel to a second direction (15') substantially perpendicular to the plane of main extent (100) as the result of an acceleration acting on the micromechanical component (1) parallel to a third direction (16') extending perpendicularly to the first direction (14') and perpendicularly to the second direction (15'), and the micromechanical component (1) has third detection means (6) for the detection of a substantially rotational third deflection (16) of the seismic mass (3) about a second rotation axis (16") parallel to the third direction (16') substantially parallel to the plane of main extent (100) as the result of an acceleration acting on the micromechanical component (1) parallel to the second direction (15'), wherein the first, second and third directions (14', 15', 16') are aligned perpendicularly to one another, wherein the seismic mass (3) has an asymmetrical mass distribution with respect to a line (112) intersecting the first rotation axis (15") and extending parallel to the third direction (16'), **characterized in that** the seismic mass (3) is connected to the substrate (2) by way of spring elements (9) in the form of precisely two torsion-flexion springs, which are respectively arranged such that they are rotatable about the second rotation axis (16"), wherein the spring elements (9) are formed in such a way that the first, second and/or third deflections (14, 15, 16) of the seismic mass (3) are made possible.

2. Micromechanical component according to claim 1, **characterized in that** the seismic mass (3) is formed as a rocker, which is mounted in a rotationally movable manner, in particular about the first and second rotation axes (15", 16").

3. Micromechanical component (1) according to one of the preceding claims, **characterized in that** the first, second and/or third detection means (4, 5 6) comprise electrodes, in particular for the capacitive measurement of the first, second and/or third deflections (14, 15, 16), wherein the first and/or second detection means (4, 5) are preferably formed as comb and/or finger electrodes and/or the third detection means (6) are preferably formed as planar electrodes.

4. Micromechanical component (1) according to one of the preceding claims, **characterized in that** the first and/or second detection means (4, 5) are arranged at at least one periphery of the seismic mass (3) and/or in a recess (8) of the seismic mass (3).

5. Micromechanical component (1) according to one of the preceding claims, **characterized in that** the third detection means (6) are arranged overlapping the seismic mass (3) perpendicularly to the plane of main extent (100).

6. Method for operating a micromechanical component (1) comprising an acceleration sensor according to one of the preceding claims, **characterized in that** an acceleration of the micromechanical component (1) in the first direction (14') is detected by a measurement of the substantially translational first deflection (14) of the seismic mass (3) and an acceleration of the micromechanical component (1) in a second direction (15'), substantially perpendicular to the first direction (14'), is detected by a measurement of the substantially rotational second deflection (15) of the seismic mass (3), wherein an acceleration of the micromechanical component (1) in a third direction (16'), substantially perpendicular respectively to the first and second directions (14', 15'), is detected by a measurement of the substantially rotational third deflection (16) of the seismic mass (3).

7. Method according to Claim 6, **characterized in that** the first deflection (14) is measured by the first detection means (4), the second deflection (15) is measured by the second detection means (5) and/or the third deflection (16) is measured by the third detection means (6).

## Revendications

1. Composant micromécanique (1) comprenant un substrat (2), une masse sismique (3) et des premiers et deuxièmes moyens de détection (4, 5), le composant micromécanique (1) comportant un capteur d'accélération, le substrat (2) possédant un plan d'extension principal (100) et les premiers moyens de détection (4) étant conçus pour la détection d'une première déviation (14) sensiblement translative de la masse sismique (3) le long d'une première direction (14') sensiblement parallèle au plan d'extension principal (100) par un effet d'accélération sur le composant micromécanique (1) parallèlement à la première direction (14'), les deuxièmes moyens de détection (5) étant conçus pour la détection d'une deuxième déviation (15) sensiblement rotative de la masse sismique (3) autour d'un premier axe de rotation (15") parallèle à une deuxième direction (15') sensiblement perpendiculaire au plan d'extension principal (100) par un effet d'accélération sur le composant micromécanique (1) parallèlement à une troisième direction (16'), qui est perpendiculaire à la première direction (14') et perpendiculaire à la deuxième direction (15'), et le composant micromécanique (1) possède des troisièmes moyens de détection (6) destinés à détecter une troisième déviation (16) sensiblement rotative de la masse sismique (3) autour d'un deuxième axe de rotation (16") parallèle à la troisième direction (16') sensiblement parallèle au plan d'extension principal (100) par un effet d'accélération sur le composant micromécanique (1) parallèlement à la deuxième direction (15'), les première, deuxième et troisième directions (14', 15', 16') étant orientées perpendiculairement les unes aux autres, la masse sismique (3) possédant une distribution de masse asymétrique par rapport à une ligne (112) qui croise le premier axe de rotation (15") et qui s'étend parallèlement à la troisième direction (16'), **caractérisé en ce que** la masse sismique (3) est reliée au substrat (2) par le biais d'éléments ressorts (9) sous la forme d'exactement deux ressorts à torsion-flexion, lesquels sont respectivement disposés de telle sorte qu'ils peuvent effectuer une torsion autour du deuxième axe de rotation (16"), les éléments ressorts (9) étant configurés de telle sorte que la première, la deuxième et/ou la troisième déviations (14, 15, 16) de la masse sismique (3) sont rendues possibles.

2. Composant micromécanique selon la revendication 1, **caractérisé en ce que** la masse sismique (3) est réalisée sous la forme d'une bascule qui est montée à mobilité rotative, notamment autour du premier et du deuxième axe de rotation (15", 16").

3. Composant micromécanique (1) selon l'une des revendications précédentes, **caractérisé en ce que** les premiers, deuxièmes et/ou troisièmes moyens de détection (4, 5, 6) comprennent des électrodes, notamment destinées à une mesure capacitive de la première, deuxième et/ou troisième déviation (14, 15, 16), les premiers et/ou deuxièmes moyens de détection (4, 5) étant de préférence réalisés sous la forme d'électrodes en peigne et/ou en languette et/ou les troisièmes moyens de détection (6) étant de préférence réalisés sous la forme d'électrodes plates.

4. Composant micromécanique (1) selon l'une des revendications précédentes, **caractérisé en ce que** les premiers et/ou les deuxièmes moyens de détection (4, 5) sont disposés au niveau d'au moins un bord de la masse sismique (3) et/ou dans une cavité (8) de la masse sismique (3).

5. Composant micromécanique (1) selon l'une des revendications précédentes, **caractérisé en ce que** les troisièmes moyens de détection (6) sont disposés en chevauchement perpendiculairement au plan d'extension principal (100) de la masse sismique (3).

6. Procédé pour faire fonctionner un composant micromécanique (1) selon l'une des revendications précédentes comprenant un capteur d'accélération, **caractérisé en ce qu'**une accélération du composant micromécanique (1) dans la première direction (14') est détectée par une mesure de la première déviation (14) sensiblement translative de la masse sismique (3) et une accélération du composant micromécanique (1) dans une deuxième direction (15') sensiblement perpendiculaire à la première direction (14') par une mesure de la deuxième déviation (15) sensiblement rotative de la masse sismique (3), une accélération du composant micromécanique (1) dans une troisième direction (16'), qui est respectivement sensiblement perpendiculaire à la première et à la deuxième direction (14', 15'), est détectée par une mesure de la troisième déviation (16) sensiblement rotative de la masse sismique (3).

7. Procédé selon la revendication 6, **caractérisé en ce que** la première déviation (14) est mesurée avec les premiers moyens de détection (4), la deuxième déviation (15) avec les deuxièmes moyens de détection (5) et/ou la troisième déviation (16) avec les troisièmes moyens de détection (6).
